# EUROPEAN PATENT SPECIFICATION

(11) **EP 0 677 693 B1**
(45) Date of publication and mention of the grant of the patent: **10.03.1999**
(21) Application number: 95302200.1
(22) Date of filing: 31.03.1995
(51) Int. Cl.: F16M 11/06, F16F 9/12

(54) **Drag unit**
Drehwiderstandsvorrichtung
Dispositif de résistance à la rotation

(30) Priority: 01.04.1994 JP 85245/94
(43) Date of publication of application: 18.10.1995
(73) Proprietor: HEIWA SEIKI KOGYO CO., LTD., Yashio-shi, Saitama (JP)
(72) Inventor: Ishikawa, Masao, c/o Heiwa Seiki Kogyo Co. Ltd, Saitama (JP)
(74) Representative: Leckey, David Herbert

(56) References cited:
- WO-A-93/21468
- CA-A- 1 090 757
- DE-A- 3 833 944
- DE-B- 1 167 545
- US-A- 4 959 671

## Description

The present invention relates to a drag unit for a tripod head. More particularly, but not exclusively, it relates to a drag unit in or for a tripod head capable of applying a drag to the tripod head during panning and tilting movements of a photographic device such as a camera, a video camera or a movie camera, capable of adjusting the size of the drag, and which may have a simplified structure.

A tripod head has been conventionally known as a device not only for fixing a photographic device such as a camera, a video camera or a movie camera, but also for permitting this device to be panned and tilted.

Some tripod heads are provided with a drag unit generating a drag during panning and tilting movements of the head in order to adjust the speed of these movements.

A drag unit described in the official gazette of the Japanese Utility Model Publication No. 96099/1990 has been proposed by the inventor of the present invention. This drag unit has a structure comprising a first unit in which first braking adjusting plates and first intermediate bodies both of which have a disc-like shape are alternately fixed on a rotary shaft, a second unit in which ring-shaped second intermediate bodies and second braking adjusting plates are disposed coaxially with the first braking adjusting plates and the first intermediate bodies, respectively, and viscous fluid sealed between the first and the second units.

The second unit rotates with a tripod head when the tripod head is tilted. The rotation of the second unit causes the viscous fluid to generate a viscous drag in relation to the first unit.

However, as is clear from the above, that drag unit has a basic disadvantage in that its structure is extremely complicated.

A second disadvantage is that the size of the drag produced in the unit cannot be adjusted. Only a switchover between "On" and "Off" states is possible. Since a photographic device may have a wide variety of models and weights, it is expected that a more stable operation can be obtained if the drag can be adjusted to a suitable size, for example, according to the weight of the photographic device.

DE-A-3833944 discloses a drag unit comprising: a sealed viscous fluid chamber; a first member having a first series of concentric projections and grooves; a second member having a second series of concentric projections and grooves; the first and second members being rotatable relative to each other; viscous fluid contained within said sealed chamber; and openings in selected grooves and/or projections to allow said viscous fluid to enter or escape from the grooves.

The present invention is characterised over DE-A-3833944 in that the drag unit comprises means for moving the first and second members relative to each other so that said first projections may enter the second grooves and the second projections may enter the first grooves.

In a particular embodiment, the invention provides a drag unit in or for a tripod head comprising a case having on an inner bottom surface thereof a plurality of coaxially disposed first projections and a plurality of first grooves formed coaxially both between said first projections and between an outermost first projection and an inner side surface of said case; a drag disc having on a bottom surface thereof a plurality of coaxially disposed second projections to be inserted into said first grooves of the case, said drag disc also having a first through hole extending through each said second projection from a bottom part to a top part thereof, and a plurality of second grooves formed coaxially between the second projections into which the first projections of the case may be inserted, said drag disc further having a second through hole extending through each said second groove from a bottom part to a top part thereof; a shaft formed into a hollow shape and supporting said case and drag disc coaxially, a pair of elongate holes being formed in sides of said shaft; a lid fixed on the case; viscous fluid sealed between said case and lid; and a sliding shaft having a pin connected to the drag disc, said pin being mounted to the shaft and extending through said elongate holes so as to permit said sliding shaft to slide along an inner surface of the shaft; wherein either of the case or drag disc is connected to a tripod head so as to rotate with rotation of said tripod head.

Thus a preferred drag unit of the present invention is provided with a case; a drag disc disposed in the inner portion of this case; a hollow shaft supporting these case and drag disc coaxially, a pair of elongate holes being formed in sides of the shaft; a lid for the case; viscous fluid sealed between these case and lid; and a sliding axis having a pin connected to the drag disc, the pin being inserted into the inner portion of the shaft and extending through the elongate holes of the hollow shaft so that the pin can slide along the elongate holes. Either of the case or the drag disc is connected to a tripod head so as to rotate with rotation of the tripod head.

The case is provided on its inner bottom surface with a plurality of first projections disposed coaxially. A plurality of first grooves are formed coaxially both between the first projections and between the outermost first projection and the inner side surface of the case. On the other hand, the drag disc is provided on its bottom surface with a plurality of second projections disposed coaxially to be inserted into the first grooves of the case. A first through hole is formed which pierces the second projection from the bottom to the top. In addition, a plurality of second grooves into which the first projections of the case are inserted are formed coaxially between the second projections. A second through hole is formed in the second groove and pieces the second groove from the bottom to the top.

This structure permits the viscous fluid sealed between the lid and the case to freely flow through the first and second through holes formed in the second projection and groove of the drag disc. This enables the sliding shaft to slide along the inner surface of the hollow shaft and also enables the drag disc to move along the shaft in the case.

When the drag disc is moved in the direction of the bottom of the case, some of the viscous fluid, having an excessive bulk larger than the capacity between the case and the drag disc, overflows toward the lid through the first and second through holes of the drag disc. The second projections of the drag disc then engage in the first grooves of the case and, concurrently, the first projections of the case engage in the second grooves of the drag disc. Side surfaces of these first and second projections come closer to each other. When the tripod head is panned or tilted under this condition, a large viscous drag is generated in the viscous fluid sealed between the first and second projections during rotation of either of the case or the drag disc and an increased drag is therefore applied to the tripod head.

On the other hand, when the drag disc is moved toward the lid, some of the viscous fluid having an excessive bulk larger than the capacity between the lid and the drag disc flows toward the case through those through holes. At this time, the side surfaces of the first and second projections are disposed apart from each other. The size of the viscous drag generated in the viscous fluid then becomes smaller, thus causing a drag to decrease.

At least in its preferred embodiments, a drag unit of the present invention can apply a drag to a tripod head when the tripod head is panned or tilted, and can also adjust the size of the drag. It is possible to adjust the size in proportion to weight and other parameters of a photographic device such as a camera, a video camera or a movie camera mounted on the tripod head.

A preferred embodiment of the invention will now be described by way of example only and with reference to the accompanying drawings, in which:
FIG. 1 is a cross sectional view depicting one embodiment of a drag unit for a tripod head according to the invention;
FIG. 2 is a partial plan view of an inner bottom surface of a case as shown in FIG. 1;
FIGs. 3A and 3B are plan views illustrating a top and a bottom surfaces of a drag unit as shown in FIG. 1; and
FIG. 4 is a cross section of another operational state of the embodiment as shown in FIG. 1.

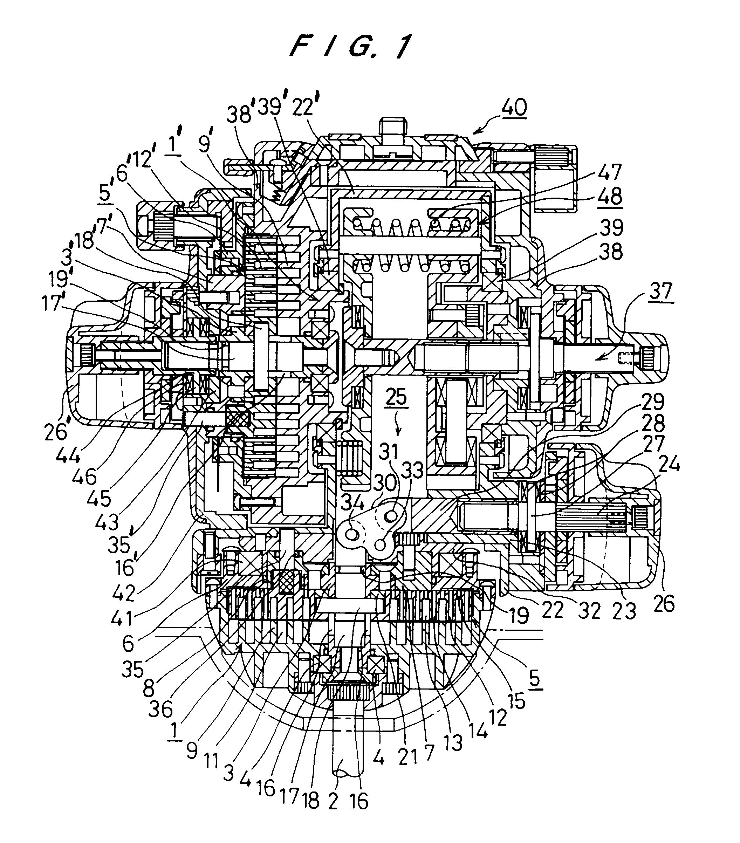

In the embodiment of FIG. 1, a drag unit which applies a drag to a tripod head when the tripod head is panned is provided at a lower portion of the tripod head to be fixed on a tripod.

A case 1 is disposed at a base portion of the tripod head. This case 1 is connected to a rotary shaft 2 which acts as a center of the panning rotation of the tripod head. A hollow shaft 3 is disposed coaxially with the rotary shaft 2. This shaft 3 is rotatably connected to a lower portion of the case 1 through a bearing 4. A drag disc 5 is slidably disposed on the shaft 3. This drag disc 5 can move upwardly and downwardly along the shaft 3. The drag disc 5 is also supported by the shaft 3 coaxially with the case 1.

A holder 6 and a bearing 7 are provided as a lid on a top surface of the case 1. The holder 6 and the bearing 7 are disposed coaxially with the shaft 3, respectively. The holder 6 is located on the outside of the bearing 7 and is fixed on the case 1. This fixing is achieved by connection of a flange provided on the outer surface of a lower end of the holder 6 with a flange provided on the outer surface of an upper end portion of the case 1. An O ring 8 is inserted as a sealing member between the holder 6 and the bearing 7. The bearing 7 is closely fixed on an upper end portion of the shaft 3 with a screw so that a sealed space is formed between the case 1 and the lid formed by the holder 6 and the bearing 7. The sealed space is filled with grease or other viscous fluid and the aforementioned drag disc 5 is disposed in this sealed space.

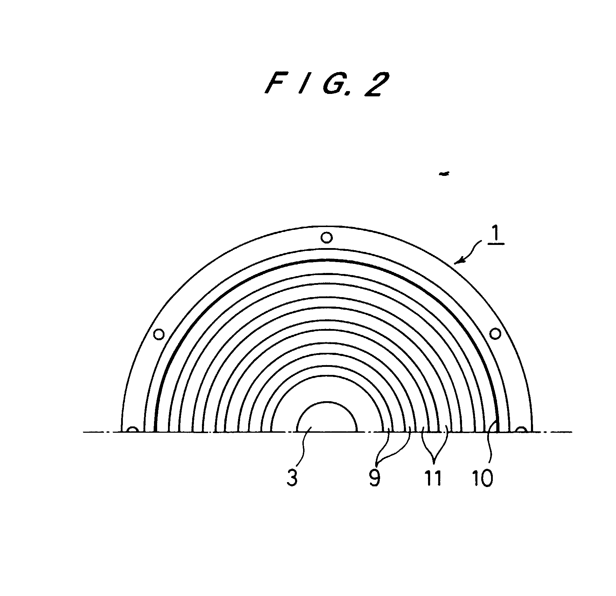

As illustrated in FIG. 2, a plurality of ring-shaped first projections 9 disposed coaxially with the shaft 3 are provided on an inner bottom surface of the case 1. Grooves 11 disposed concentrically around the shaft 3 are formed both between these projections 9 and between an outermost projection 9 and an inner side surface 10 of the case 1.

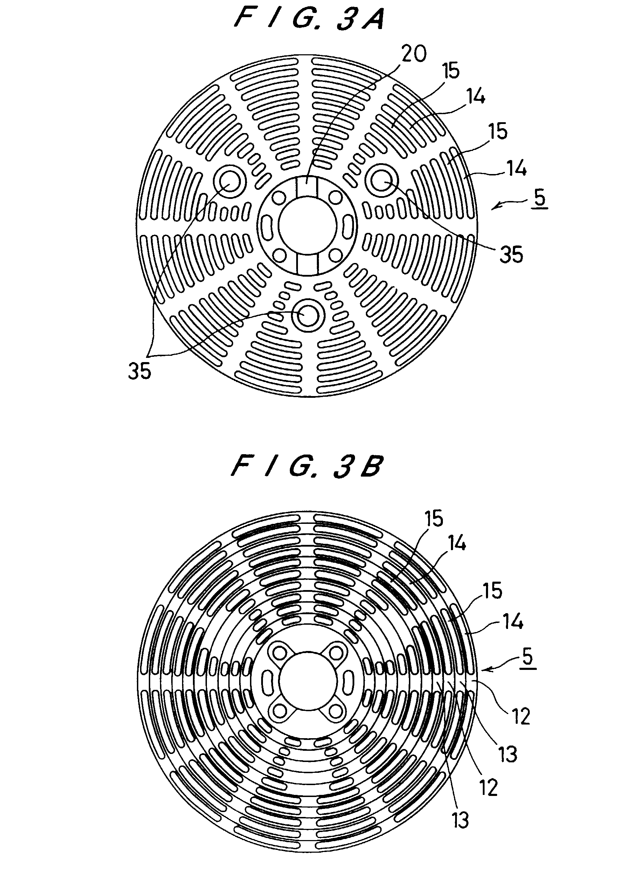

Further, the drag disc 5 as illustrated in FIG. 1 is provided with a plurality of second projections 12. These projections 12 are disposed corresponding to locations of the grooves 11 of the case 1 and are insertable into those grooves 11. Second grooves 13 are formed on the disc 5 between the projections 12 at locations corresponding to the locations of the projections 9 which are insertable into these grooves 13. Examples of such a drag disc 5 are depicted in Figs. 3A and 3B.

The projections 12 have a ring-like shape corresponding to the shape of the grooves 11 of the case 1 of FIG. 2. These projections 12 are also disposed coaxially with the shaft 3. Similarly the grooves 13 are disposed corresponding to locations of the projections 9 of the case 1 and concentrically around the shaft 3.

A first series of through holes 14 extend through the projections 12 from the bottom to the top. A second series of through holes 15 extend into the grooves 13 from the bottom to the top. These through holes 14 and 15 are formed into an arc shape along the projections 12 and the grooves 13, respectively. This results in the through holes being disposed coaxially with the support shaft 3. The through holes 14 and 15 serve as flow paths for the viscous fluid sealed in the sealed space between the holder 6, bearing 7 and the case 1 as shown in FIG. 1. The viscous fluid can flow upwardly and downwardly in the sealed space through these through holes 14 and 15. This permits the drag disc 5 to slide upwardly and downwardly along the shaft 3, although the viscous fluid is sealed.

A pair of elongate holes 16 opposite to each other are formed in a side surface of the shaft 3 in which shaft a sliding shaft 17 is inserted. This sliding shaft 17 is slidable along an inner surface of the shaft 3. A pin 18 is provided on the sliding shaft 17 at one of its tip portions. An O ring 19 is provided at an outer surface of the sliding shaft 17, causing the sliding shaft 17 to come into close contact with the inner surface of the shaft 3.

The pin 18 protrudes from the holes 16 of the shaft 3 and is connected to the drag disc 5. The connection can be achieved by, for instance, placing the pin 18 in a recess 20 as shown in FIG. 3A in the vicinity of the center of the drag disc 5, placing a fixing plate 21 on the pin 18 and fixing the fixing plate 21 on the drag disc 5 with a fixing member such as a screw. Since the drag disc 5 is connected to the sliding shaft 17 by the pin 18, a sliding movement of the sliding shaft 17 causes the drag disc 5 to slide along the shaft 3. The distance of movement of the drag 5 along the shaft 3 corresponds with the sliding distance of the sliding shaft 17 and is defined within the range of the length of the pair of elongate holes 16 formed on the side surface of the shaft 3.

The other tip portion of the sliding shaft 17 is connected through a transmission mechanism 25 to a rotary shaft 24 rotatably inserted into the inside of a fixed shaft 23. This fixed shaft 23 has a hollow shape and is fixed on a side portion of a longitudinal portion 22 of the tripod head. An operating knob 26 is provided on one end of the rotary shaft 24. A screw portion is formed on an outer surface of the other end of the rotary shaft 24, but does not move fore and aft. A disc 27 is coaxially mounted on the rotary shaft 24 and is arranged between bearings 28 fixed coaxially with the fixed shaft 23.

A tube 29 is inserted between the rotary shaft 24 and the fixed shaft 23 and is slidable in the direction of its length. An inner surface of one end of the tube 29 is formed with a screw thread and engages with the screw portion of the rotary shaft 24. Rotation of the operation knob 26 causes the rotary shaft 24 to rotate and causes the tube 29 to slide because of the engagement of those screw portions. A drag operating plate 30 is rotatably connected through a shaft 31 to the other end of the tube 29.

A center portion of the drag operating plate 30 is connected through a shaft 33 to a top portion of a fixing plate 32 for fixing the bearing 7 on the longitudinal member 22. The fixing plate 32 is disposed at a bottom portion of the longitudinal member 22. The drag operating plate 30 is also rotatably connected through a shaft 34 to the sliding shaft 17. It is clear from the above that the drag operating plate 30 is rotatably supported on three points and that the tube 29 and the sliding shaft 17 are connected with each other by the plate 30. Three openings are formed on the drag operating plate 30, two of which the shafts 31 and 34 are inserted into are formed into an ellipse-like shape.

In such a transmission mechanism 25, when rotation of the knob 26 causes the rotary shaft 24 to rotate, the rotary motion is converted into a sliding motion of the tube 29. Then, the sliding motion of the tube 29 causes the drag operating plate 30 to rotate around the shaft 33. The openings into which the shafts 31 and 34 are inserted are an ellipse-like shape that the drag operating plate 30 rotates smoothly.

The sliding shaft 17 is pushed down by the drag operating plate 30 during its rotation. Consequently, the rotary motion of the knob 26 is converted into a vertical motion of the sliding shaft 17. Thus an operation of the operation knob 26 provided on the side surface of the tripod head can cause the drag disc 5 to move upwardly and downwardly in the case 1.

In FIG. 1, an upwardly extending guide pin 35 is provided on an upper portion of the drag disc 5 so as to ensure a stable vertical motion of the drag disc 5. A through hole is formed on the bearing 7, fixing plate 32 and a bottom portion of the longitudinal member 22, respectively. These through holes are disposed corresponding to the location of the guide pin 35. The guide pin 35 is movably inserted into each of these through holes and can move along their inner surfaces. An O ring 36 is provided as a sealing member on an upper portion of the through hole of the shaft 7 to maintain a seal and prevent the viscous fluid from leaking. The guide pin 35 can be provided, for example, at three locations the top portion of the drag disc 5, as shown in FIG. 3A.

As further depicted in FIG. 1, a horizontal axis 37 is provided in the tripod head and acts as a center during a tilting movement of the head. A strut 38 tiltable around the horizontal axis 37 is connected through a bearing 39 to a longitudinal member 22. On the top of this strut 38, a sliding plate device 40 is provided for mounting a photographic device such as a camera, a video camera or a movie camera.

A bearing 41 is disposed between the fixing plate 32 and the holder 6. The longitudinal member 22 can rotate with the strut 38 around the rotary shaft 2 and therefore it is possible to pan a photographic device mounted on the sliding plate device 40.

The drag unit described in the above operates during a panning movement as follows:

The case 1 and the holder 6 do not rotate because both of them are fixed. On the other hand, when the longitudinal member 22 rotates with the strut 38 in the horizontal plane, the fixing plate 32, the bearing 7 and the shaft 3, in turn, rotate with rotation of the longitudinal member 22. This is because the bearing 7 is fixed on the longitudinal member 22 through the fixing plate 32 and the shaft 3 is fixed on the bearing 7. The sliding shaft 17 inserted into the inside of the shaft 3 is in close contact with the inner surface of the shaft 3 via the O ring 19. The fixed shaft 23 into which the rotary shaft 24 is inserted is fixed on the longitudinal shaft 7. Consequently, the sliding shaft 17 also rotates integrally with the shaft 3. These rotations enable the drag disc 5 connected to the sliding shaft 17 to rotate when the tripod head is panned.

Viscous drag is generated in the viscous fluid sealed between the projections 12 of the rotating drag disc 5 and the projections 9 of the fixed case 1, acting as a drag against the panning movement.

In such a state as shown in FIG. 1, since the projections 12 of the drag disc 5 are not inserted into the grooves 11, nor are the projections 9 on the case 1 inserted into the grooves 13 of the drag disc 5, in other words, the case 1 and the drag disc 5 do not engage with each other, only a small viscous drag is generated in the viscous fluid even when the drag disc 5 rotates with the horizontal rotation of the longitudinal member 22. This allows the tripod head to be rotated with small torque and at a high speed.

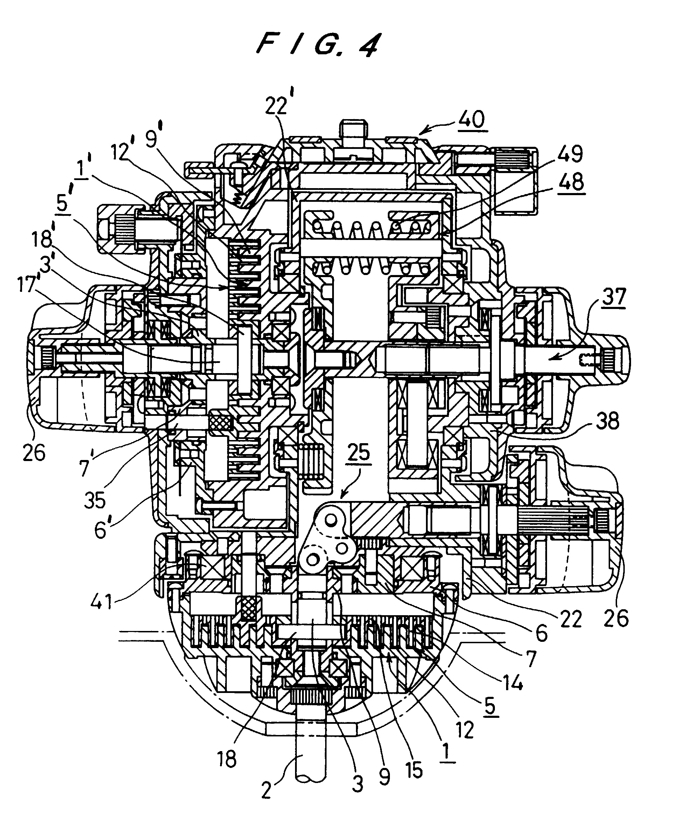

In such a state as shown in FIG. 4, on the other hand, when rotation of the operation knob 26 causes the sliding shaft 17 to move downwardly via the transmission mechanism 25, some of the viscous fluid having a volume larger than the capacity between the case 1 and the drag disc 5 flows upwardly through the through holes 14 and 15 formed on the projections 12 and the grooves 11 of the drag disc 5. The projections 12 of the drag disc 5 are then inserted into the grooves 11 of the case 1 and, concurrently, the projections 9 on the case 1 are inserted into the grooves 11 of the drag disc 5, bringing about a close contact of these projections 12 and 9. In other words, the case 1 and the drag disc 5 engage with each other. Under this condition, when the tripod head is panned around the rotary shaft 2, rotation of the drag disc 5 causes the projections 12 to rotate, generating a large viscous drag in the viscous fluid between the projections 12 and 9. A large drag is thus applied to the tripod head during a panning movement. A large torque is applied to pan the tripod head in this condition, and its panning speed becomes slow.

When the drag disc 5 is placed at a state intermediate those states shown in FIGs. 1 and 4, the drag is dependant upon that state. This makes it possible to adjust the drag continuously between maximum and minimum values. The panning speed of a photographic device can thus be controlled to a prescribed value and the operational stability of the photographic device can be improved.

As is clear from the structure described in the above, the structure is much simpler than the conventional one. The number of parts is decreased which pays off in reducing the cost of the drag unit.

In FIG. 1, a drag unit for a tilting movement is further provided.

This drag unit is disposed around a longitudinal axis 37 as a center of a tilting movement, but the structure of this unit is almost equivalent to that of the drag unit for a panning movement except minor differences as follows:

In the drag unit for the tilting movement, a case 1' is rotatably connected to a longitudinal member 22' through a bearing 39'. The longitudinal member 22' defining the horizontal axis 37 can rotate in the horizontal plane, but it cannot rotate in the vertical plane.

A strut 38' is integrally connected to an upper portion of the case 1'. This permits the case 1' to rotate with the strut 38 around the horizontal axis 37. Consequently, a holder 6' fixed on the case 1' can rotate therewith.

A bearing 7' forming a lid with the holder 6' is fixed on a casing 42 forming a side portion of the tripod head and it is disposed coaxially with the horizontal axis 37. A shaft 3' fixed to this bearing 7' is therefore incapable of rotating. A sliding shaft 17' does not rotate with respect to, but slides along an inner surface of the shaft 3'. Consequently, a drag disc 5' does not rotate relative to, but slides along, the shaft 3' because it is connected to a pin 18' fixed on a tip portion of the sliding shaft 17'.

A guide pin 35' projecting from the drag disc 5' is inserted into a through hole formed on the casing 42. The through hole of the casing 42 guides sliding movement of the guide pin 35' together with a through hole in the bearing 7'. This ensures sliding movement of the drag disc 5'.

A fixed shaft 43 is disposed coaxially with the horizontal axis 37 and a rotary shaft 44 is inserted into the inside of the fixed shaft 43. This rotary shaft 44 is mounted with an operating knob 26' on its tip portion. A disc 45 is provided coaxially with the rotary shaft 44 and is inserted into a bearing 46 disposed on the casing 42. This disc 45 is also disposed coaxially with the horizontal axis 37.

The rotary shaft 44 is formed into a hollow shape with a screw portion on its inner surface. One end of the sliding shaft 17' opposite to the pin 18' is also formed into a screw portion which engages with the screw portion of the rotary shaft 44. The sliding shaft 17' is directly connected to the rotary shaft 44 through these screw portions.

In this structure, when the operation knob 26' is rotated, the resultant rotation of the rotary shaft 44 is converted through the screw portions directly into sliding movement of the sliding shaft 17' in the direction along the horizontal axis 37.

As will be understood from the above, the drag produced in the 'tilting' drag unit acts on the tripod head in the same way as in the drag unit for the panning movement. In the state of FIG. 1, even if the member 38 is tilted so as to rotate the case 1', only a little viscous drag is generated in the viscous fluid because the case 1' and the drag disc 5' do not engage with each other. Consequently, the tripod head can be tilted with even a small torque and at a high speed.

On the other hand, when rotation of the operation knob 26' causes the drag disc 5' to engage with the case 1' as shown in FIG. 5 and the tripod head is tilted under this condition, rotation of the drag disc 5' results in the generation of a large viscous drag in the viscous fluid between side surfaces of the projections 9' and 12' provided on each of the case 1' and the drag disc 5'. A large drag thus acts on the tripod head and a large torque is required to tilt the tripod head, and its tilting speed becomes slow. The tilting speed of a photographic device to be mounted on the sliding plate device 40 can be controlled continuously. The structure of the unit is simplified.

Further, a counterbalancing unit 48 is provided for the tripod head in which coil springs 47 are disposed parallel to the horizontal axis 37. The drag unit acts as a drag against a righting moment, generated by the counterbalancing unit 48 according to elastic force of the coil springs 47, acting to return the tripod head to its initial position. This prevents the tripod head from rapidly turning to its initial position and ensures operational safety.

From the above, it will be seen that at least in preferred embodiments of the present invention, when a photographic device such as a camera, a video camera or a movie camera is panned and tilted, a controlled drag may be applied to the tripod head. The size of the drag is adjustable, for example, corresponding to a motion and weight of the photographing device. The structure of the drag unit is simplified and therefore it is possible to reduce its cost.

The present invention is not restricted to the afore-stated specific embodiments. It is needless to say that various modifications of the structure of the tripod head are possible with the scope of the invention as defined by the claims.

## Claims

1. A drag unit comprising: a sealed viscous fluid chamber; a first member (1;1') having a first series of concentric projections (9;9') and grooves (11;11'); a second member (5;5') having a second series of concentric projections (12;12') and grooves (13;13'); the first and second members being rotatable relative to each other; viscous fluid contained within said sealed chamber; and openings in selected grooves (11,13) and/or projections (9,12; 9',12') to allow said viscous fluid to enter or escape from the grooves; characterised by means for moving the first and second members relative to each other in a direction such that said first projections (9;9') enter the second grooves (13;13') and the second projections (12;12') enter the first grooves (11;11').

2. A drag unit as claimed in claim 1 wherein said first member (1;11) forms part of the chamber.

3. A drag unit as claimed in claim 1 or 2 wherein said second member (5;5') is disc-like.

4. A drag unit as claimed in any preceding claim wherein a shaft (3;3') supports said second member (5; 5') coaxially with the first member (1;1'), and so as to be axially movable with relation thereto.

5. A drag unit as claimed in claim 4 wherein said shaft (3;3') is hollow and has elongate slots (16;16') formed in a side wall thereof, and wherein an axially movable actuating member (17;17') arranged within said shaft (3;3') has means (18;18') projecting from said slots and engaging with said second member (5;5') to move said second member (5;5') axially.

6. A drag unit as claimed in claim 5 wherein said actuating member (17) is connected with a rotary operating member (26) through transmission means (25).

7. A drag unit as claimed in any preceding claim wherein guide means (35;35') are provided to guide said second member axially relative to the first member.

8. A drag unit as claimed in claim 1 wherein said first member (1;1') is a case having on an inner bottom surface thereof a plurality of said first projections (9) which are coaxially disposed and a plurality of said first grooves (11) formed coaxially both between said first projections and between an outermost first projection and an inner side surface of said case; and wherein said second member (5;5') is a drag disc having on a bottom surface thereof a plurality of said second projections (12) which are coaxially disposed to be inserted into said first grooves of the case, said drag disc also having a first through hole (14) extending through each said second projection from a bottom part to a top part thereof, and a plurality of said second grooves (13) formed coaxially between the second projections into which the first projections of the case may be inserted, said drag disc further having a second through hole (15) extending through each said second groove from a bottom part to a top part thereof; said drag unit further comprising: a shaft (3) formed into a hollow shape and supporting said case and drag disc coaxially, a pair of elongate holes (16) being formed in sides of said shaft (3); a lid (6,7) fixed on the case; viscous fluid sealed in said viscous fluid chamber, said chamber being defined between said case and lid; and a sliding shaft (17) having a pin (18) connected to the drag disc, said pin being mounted to the shaft (17) and extending through said elongate holes (10) so as to permit said sliding shaft to slide along an inner surface of the shaft (3); wherein either of the case or drag disc is connected or connectable to a tripod head so as to rotate with rotation of said tripod head.

9. A drag unit as claimed in claim 8, wherein the pin (18) is fixed on one end of said sliding shaft (17), and an operation knob (26) is connected with the other end of the sliding shaft (17) through a transmission mechanism (25) which converts rotation of said operation knob into sliding movement of the sliding shaft, said operation knob being rotatably disposed around a rotary shaft (24) provided for said tripod head.

10. A drag unit as claimed in claim 8 or 9, wherein a guide pin (35) projects upwardly from a top surface of the drag disc (5), the lid is provided with a through hole, and a sealing member (36) is disposed on an inner surface of said through hole, said guide pin being inserted into the through hole of the lid.

## Patentansprüche

1. Widerstandseinheit mit einer dicht gekapselten Kammer für ein zähflüssiges Fluid; einem ersten Element (1; 1') mit einer ersten Serie konzentrischer Vorsprünge (9; 9') und Nuten (11; 11'); einem zweiten Element (5; 5') mit einer zweiten Serie konzentrischer Vorsprünge (12; 12') und Nuten (13; 13'); wobei die ersten und zweiten Elemente relativ zueinander verdrehbar sind; einem zähflüssigen Fluid innerhalb der dicht gekapselten Kammer; und Öffnungen in ausgewählten Nuten (11, 13) und/oder Vorsprüngen (9, 12; 9', 12'), so daß das zähflüssige Fluid in die Nuten eintreten oder aus diesen heraustreten kann;
**gekennzeichnet,** durch Mittel zum Bewegen der ersten und zweiten Elemente relativ zueinander in einer Richtung derart, daß die ersten Vorsprünge (9; 9') in die zweiten Nuten (13; 13') eintreten und die zweiten Vorsprünge (12; 12') in die ersten Nuten (11; 11') eintreten.

2. Widerstandseinheit nach Anspruch 1, bei welcher das erste Element (1; 1') einen Teil der Kammer bildet.

3. Widerstandseinheit nach einem der Ansprüche 1 oder 2, bei welcher das zweite Element (5; 5') scheibenartig ausgebildet ist.

4. Widerstandseinheit nach irgendeinem der vorstehenden Ansprüche, bei welcher ein Schaft (3; 3') das zweite Element (5; 5') koaxial zu dem ersten Element (1; 1') haltert, so daß es relativ hierzu axial bewegbar ist.

5. Widerstandseinheit nach Anspruch 4, bei welcher der Schaft (3; 3') hohl ausgebildet ist und längliche Schlitze (16; 16') aufweist, welche in einer Seitenwand ausgebildet sind, und bei welcher ein axial bewegbares Betätigungselement (17; 17'), welches innerhalb des Schafts (3; 3') angeordnet ist, Mittel (18; 18') aufweist, die aus den Schlitzen vorragen und in das zweite Element (5; 5') zur axialen Bewegung des zweiten Elements (5; 5') eingreifen.

6. Widerstandseinheit nach Anspruch 5, bei welcher das Betätigungselement (17) mittels Übertragungsmitteln (25) mit einem Drehbedienungselement (26) verbunden ist.

7. Widerstandseinheit nach irgendeinem der vorstehenden Ansprüche, bei welcher Führungsmittel (35; 35') zur axialen Führung des zweiten Elements relativ zu dem ersten Element vorgesehen sind.

8. Widerstandseinheit nach Anspruch 1, bei welcher das erste Element (1; 1') ein Gehäuse ist, welches auf einer inneren unteren Fläche eine Anzahl der ersten Vorsprünge (9), welche koaxial ausgebildet sind, und eine Anzahl der ersten Nuten (11), welche koaxial sowohl zwischen den ersten Vorsprüngen und zwischen einem äußersten ersten Vorsprung und einer inneren Seitenfläche des Gehäuses ausgebildet sind, aufweist; und bei welcher das zweite Element (5; 5') eine Widerstandscheibe ist, welche auf einer unteren Fläche eine Anzahl der zweiten Vorsprünge (12) aufweist, welche zur Einführung in die ersten Nuten des Gehäuses koaxial angeordnet sind, wobei die Widerstandscheibe ferner ein erstes Durchgangsloch (14) aufweist, welches sich durch jeden zweiten Vorsprung von einem unteren Teil zu einem oberen Teil hiervon erstreckt, sowie eine Anzahl von zweiten Nuten (13), welche koaxial zwischen den zweiten Vorsprüngen, in welche die ersten Vorsprünge des Gehäuses einführbar sind, geformt sind, wobei die Widerstandscheibe ferner ein zweites Durchgangsloch (15) aufweist, welches sich durch jede zweite Nut von einem unteren Teil zu einem oberen Teil hiervon erstreckt; wobei die Widerstandseinheit ferner aufweist: einen Schaft (3), welcher zu einer Hohlform geformt ist und das Gehäuse und die Widerstandscheibe koaxial haltert, ein Paar länglicher Löcher (16), welche in Seiten des Schaftes (3) ausgebildet sind; einem Deckel (6, 7), welcher auf dem Gehäuse befestigt ist; zähflüssiges Fluid, welches in der Kammer für zähflüssiges Fluid dicht eingekapselt ist, wobei die Kammer zwischen dem Gehäuse und dem Deckel definiert ist; und einen Gleitschaft (17) mit einem Stift (18), welcher mit der Widerstandscheibe verbunden ist, wobei der Stift auf den Schaft (17) montiert ist und sich durch die länglichen Löcher (10) erstreckt, so daß eine Gleitbewegung des Gleitschaftes entlang einer inneren Fläche des Schaftes (3) ermöglicht ist; wobei das Gehäuse und/oder die Widerstandscheibe mit einem Dreibeinkopf für eine Drehung mit einer Drehung des Dreibeinkopfes verbunden oder verbindbar ist.

9. Widerstandseinheit nach Anspruch 8, bei welcher der Stift (18) auf einem Ende des Gleitschaftes (17) befestigt ist, und ein Betriebsknopf (26) mit dem anderen Ende des Gleitschafts (17) über einen Übertragungsmechanismus, welcher eine Drehung des Betriebsknopfes in eine Gleitbewegung des Gleitschaftes umwandelt, verbunden ist, wobei der Betriebsknopf drehbar um einen Drehschaft (24), welcher für den Dreibeinkopf vorgesehen ist, ausgebildet ist.

10. Widerstandseinheit nach einem der Ansprüche 8 oder 9, bei welcher ein Führungsstift (35) von einer oberen Fläche der Widerstandscheibe (5) nach oben vorsteht, der Deckel mit einem Durchgangsloch ausgebildet ist, und ein Kapselungselement (36) auf einer inneren Fläche des Durchgangsloches ausgebildet ist, wobei der Führungsstift in das Durchgangsloch des Deckels eingeführt ist.

## Revendications

1. Dispositif de résistance au mouvement comprenant une chambre étanche de fluide visqueux, un premier organe (1; 1') ayant une première série de saillies (9; 9') et de rainures (11; 11') concentriques, un second organe (5 ; 5') ayant une seconde série de saillies (12; 12') et de rainures (13 ; 13') concentriques, les premier et second organes étant rotatifs l'un par rapport à l'autre, du fluide visqueux contenu à l'intérieur de ladite chambre étanche et des ouvertures dans des rainures (11; 13) et/ou des saillies (9, 12; 9', 12') sélectionnées pour permettre audit fluide visqueux d'entrer et de s'échapper des rainures, caractérisé par des moyens pour déplacer les premier et second organes l'un par rapport à l'autre dans une direction telle que lesdites premières saillies (9 ; 9') pénètrent dans les secondes rainures (13; 13') et les secondes saillies (12; 12') pénètrent dans les premières rainures (11 ; 11').

2. Dispositif selon la revendication 1, dans lequel ledit premier organe (1 ; 1') forme une partie de la chambre.

3. Dispositif selon la revendication 1 ou 2, dans lequel ledit second organe (5 ; 5') est analogue à un disque.

4. Dispositif selon l'une quelconque des revendications précédentes, dans lequel un arbre (3 ; 3') supporte ledit second organe (5 ; 5') de manière coaxiale au premier organe (1 ; 1') et de manière à être déplaçable axialement par rapport à celui-ci.

5. Dispositif selon la revendication 4, dans lequel ledit arbre (3; 3') est creux et a des fentes allongées (16 ; 16') formées dans une paroi latérale de celui-ci et dans lequel un organe d'actionnement déplaçable axialement (17 ;17') agencé à l'intérieur dudit arbre (3; 3') a des moyens (18; 18') faisant saillie depuis lesdites fentes et coopérant avec ledit second organe (5 ; 5') pour déplacer ledit second organe (5 ; 5') axialement.

6. Dispositif selon la revendication 5, dans lequel ledit organe d'actionnement (17) est relié à un organe (26) fonctionnant en rotation au travers de moyens de transmission (25).

7. Dispositif selon l'une quelconque des revendications précédentes, dans lequel des moyens de guidage (35 ; 35') sont prévus pour guider ledit second organe d'actionnement par rapport au premier organe.

8. Dispositif selon la revendication 1, dans lequel ledit premier organe (1 ; 1') est un boîtier ayant, sur une surface de fond intérieure de celui-ci, une pluralité desdites premières saillies (9) qui sont disposées de manière coaxiale et une pluralité desdites premières rainures (11) formées de manière coaxiale toutes deux entre lesdites premières saillies et entre une première saillie le plus à l'extérieur et une surface latérale intérieure dudit boîtier ; et dans lequel ledit second organe (5 ; 5') est un disque de retenue ayant, sur une surface de fond de celui-ci, une pluralité desdites secondes saillies (12) qui sont disposées coaxialement pour être insérées dans lesdites premières rainures du boîtier, ledit disque de retenue ayant également un premier trou traversant (14) s'étendant au travers de chaque dite seconde saillie depuis sa partie de fond vers sa partie de dessus, et une pluralité desdites secondes rainures (13) formées de manière coaxiale entre les secondes saillies à l'intérieur desquelles les premières saillies du boîtier peuvent être insérées, ledit disque de retenue ayant en outre un second trou traversant (15) s'étendant au travers de chaque dite seconde rainure depuis sa partie de fond vers sa partie de dessus, ledit dispositif comprenant en outre : un arbre (3) formé à l'intérieur d'une forme creuse et supportant lesdits boîtier et disque de retenue de manière coaxiale, une paire de trous allongés (16) étant formée dans des côtés dudit arbre (3) ; un couvercle (6, 7) fixé sur le boîtier ; du fluide visqueux confiné dans ladite chambre de fluide visqueux, ladite chambre étant définie entre lesdits boîtier et couvercle ; et un arbre coulissant (17) ayant une broche (18) reliée au disque de retenue, ladite broche étant montée sur l'arbre (17) et s'étendant au travers desdits trous allongés (10) de manière à permettre audit arbre coulissant de coulisser le long d'une surface de l'arbre (3) ; dans lequel l'un quelconque du boîtier et du disque de retenue est relié ou reliable à une tête de trépied de manière à tourner avec la rotation de ladite tête de trépied.

9. Dispositif selon la revendication 8, dans lequel la broche (18) est fixée sur une extrémité dudit arbre coulissant (17), et un bouton de commande (26) est relié à l'autre extrémité de l'arbre coulissant (17) au travers d'un mécanisme de transmission (25) qui convertit la rotation dudit bouton de commande en un mouvement coulissant dudit arbre coulissant, ledit bouton de commande étant disposé de manière rotative autour d'un arbre rotatif (24) prévu pour ladite tête de trépied.

10. Dispositif selon la revendication 7 ou 8, dans lequel une broche de guidage (35) fait saillie vers le haut depuis une surface de dessus du disque de retenue (5), le couvercle est muni d'un trou traversant et un organe d'étanchéité (36) est disposé sur une surface intérieure dudit trou traversant, ladite broche de guidage étant insérée dans le trou traversant du couvercle.
